# FASCICULE DE BREVET EUROPEEN

(11) **EP 3 889 024 B1**
(45) Date de publication et mention de la délivrance du brevet: **07.06.2023**
(21) Numéro de dépôt: 21173604.6
(22) Date de dépôt: 01.12.2017
(51) Int. Cl.: B62K 25/28, B62L 1/00, B62M 9/00, B62M 6/60, B62M 6/70

(54) **BICYCLETTE MOTORISÉE**
MOTORISIERTES FAHRRAD
MOTORISED BICYCLE

(30) Priorité: 05.12.2016 FR 1661953
(43) Date de publication de la demande: 06.10.2021
(62) Demande divisionnaire de: 17816967.8
(73) Titulaire: MS Systemes, 38090 Vaulx-Milieu (FR)
(72) Inventeur: MERCIER, Adam, 69008 LYON (FR); SUTEAU, Lucas, 38090 VAULX-MILIEU (FR)
(74) Mandataire: INNOV-GROUP

(56) Documents cités:
- EP-A1- 2 349 823
- WO-A1-2009/000011
- DE-U1-202016 104 737
- US-A1- 2014 102 822

## Description

### DOMAINE TECHNIQUE

Le domaine technique de l'invention est une bicyclette motorisée, notamment destinée à la pratique du vélo tout terrain.

### ART ANTERIEUR

Les bicyclettes motorisées sont récemment devenues relativement courantes. Elles comportent un moteur fournissant au cycliste une assistance, en particulier pour gravir une montée. Généralement, ces bicyclettes comportent un moteur électrique disposé au niveau du moyeu d'une roue. De telles bicyclettes sont généralement destinées à un usage sur route. Le recours à une assistance peut également s'avérer utile pour des utilisations hors route, sur des chemins ou des terrains escarpés, sur des bicyclettes appelées vélos tout terrain, en anglais "Moutain Bike", et usuellement désignées par l'acronyme VTT. L'usage du VTT sur des terrains accidentés et pentus s'est répandu, avec l'essor du VTT dit de descente, consistant à dévaler des pistes aménagées. Généralement, les cyclistes remontent les pistes à l'aide de remontées mécaniques. Mais le recours aux remontées mécaniques limite la pratique du VTT de descente aux domaines équipés de telles remontées, dans les heures d'ouverture de ces dernières. Par ailleurs, les VTT de descente sont des engins robustes et lourds, dédiés à une utilisation en descente. Ils ne sont pas appropriés à une montée sur des terrains pentus et peu roulants.

Les documents US2010/0212985 ou WO2009000011 décrivent une bicyclette dont la roue arrière peut être entraînée par une chaîne reliée à un moteur. La roue arrière comporte une couronne de transmission reliée à la chaîne. Le moyeu de la roue arrière peut être entraîné par des disques de fixation pinçant les rayons de la roue. La couronne de transmission peut être solidarisée ou désolidarisée des disques de fixations par une goupille ou une vis. Cela permet de passer dans une configuration classique d'entraînement de la roue par un pédalier à une configuration d'assistance, selon laquelle la roue arrière est entraînée par le moteur. Mais le passage d'une configuration à une autre suppose une opération manuelle fastidieuse, consistant à désolidariser les rayons de la roue à la couronne de transmission. Cela exclut un passage entre les deux configurations sans descendre de la bicyclette. Un tel fonctionnement n'est pas admissible par un cycliste.

Le document US20040144584 décrit une bicyclette suspendue dont la roue arrière peut être entraînée par une chaîne reliée à un moteur. La roue arrière comporte une couronne de transmission reliée à la chaîne et fixée à la roue arrière, et solidaire de cette dernière. Ainsi, la couronne de transmission est toujours entraînée en rotation par la roue arrière. Le moteur comporte alors un embrayage, assurant un couplage ou un découplage d'un arbre moteur avec la couronne de transmission. Un tel embrayage augmente la complexité du montage, ainsi que le coût et le poids de la bicyclette.

Le document US6062329 décrit une bicyclette à assistance motorisée, comportant un embrayage disposé entre un moteur thermique et le moyeu d'une roue arrière. L'entraînement motorisé de la roue est effectué par une couronne de transmission, cette dernière étant disposée de façon adjacente d'une roue dentée apte à être entraînée en rotation par une chaîne reliée à un pédalier. La présence d'un embrayage entre le moteur thermique et le moyeu de la roue arrière alourdit considérablement le poids de la bicyclette et la complexité du montage. De plus, les inventeurs de la présente invention ont constaté que le fait de disposer la couronne de transmission et la roue dentée d'un même côté de la roue n'est pas optimal. Cela entraîne un déséquilibre de la bicyclette ainsi que des difficultés de montage et de maintenance. Cela empêche également l'utilisation simultanée de plusieurs pignons autour du moyeu arrière. De plus, cette conception déséquilibrée induit un encombrement trop important d'un même côté de la roue. Afin de compenser cet encombrement, les rayons, s'étendant entre le moyeu et la jante de la roue arrière, doivent alors présenter une inclinaison proche de la verticale, ce qui nuit à la rigidité de la roue arrière.

On peut tirer les mêmes conclusions de la bicyclette décrite dans le document WO9311992.

Les bicyclettes décrites dans les documents précédents ont des conceptions difficilement adaptées à une utilisation dans un contexte sportif.

Le document EP2349823 décrit une bicyclette à assistance motorisée, dans laquelle le moteur est disposé à proximité du moyeu de la roue arrière, sur lequel est montée une couronne de transmission. Le moteur est relié à un réducteur de vitesse. Les inventeurs de la présente invention estiment qu'une telle configuration induit un déséquilibre des masses vers l'arrière de la bicyclette, et cela est particulièrement préjudiciable dans le cas d'une bicyclette équipée d'une suspension arrière.

Les inventeurs ont conçu une bicyclette, et notamment une bicyclette tout terrain, ou VTT, à assistance électrique, surmontant les inconvénients mentionnés ci-dessus, en permettant aux cyclistes de grimper des chemins escarpés. La bicyclette est de conception simple, l'assistance électrique n'augmentant pas le poids de façon rédhibitoire. Par ailleurs, le basculement entre une configuration d'entraînement par le pédalier et une configuration d'assistance motorisée est particulièrement simple, ne nécessitant pas que le cycliste mette pied à terre.

Le document DE 20 2016 104737 U1 divulgue les caractéristiques du préambule de la revendication 1.

### EXPOSE DE L'INVENTION

Un objet de l'invention est une bicyclette comportant une roue avant et une roue arrière, les roues avant et arrière étant reliées par un cadre, la roue arrière comportant un moyeu arrière, le moyeu arrière étant relié à un premier mécanisme d'entraînement, comportant au moins un pignon monté sur une première roue libre, le pignon étant apte à être entraîné par une chaîne, cette dernière étant apte à être mise en mouvement par un pédalier, la bicyclette comportant :
- un moteur, monté sur le cadre ;
- le moteur étant configuré pour mettre en mouvement, notamment au moyen d'un arbre moteur, un élément souple de transmission ;
- le moyeu arrière étant relié à un deuxième mécanisme d'entraînement, apte à être entraîné par l'élément souple de transmission ; de telle sorte que la roue arrière est apte à être entraînée :
   - par le premier mécanisme d'entraînement, lorsque la chaîne est mise en mouvement par le pédalier ;
   - ou par le deuxième mécanisme d'entraînement, lorsque l'élément souple de transmission est actionné par le moteur ;
   la bicyclette étant caractérisée en ce que :
   - le deuxième mécanisme d'entraînement comporte une couronne de transmission fixée à une deuxième roue libre, la couronne de transmission étant apte à être entraînée en rotation par l'élément souple de transmission ;
   - la roue libre est insérée autour du moyeu arrière, de telle sorte que la roue libre entraîne le moyeu arrière lorsque l'élément souple de transmission entraîne la couronne de transmission en rotation.

Le fait que la couronne de transmission puisse entraîner le moyeu arrière par l'intermédiaire de la deuxième roue libre simplifie le passage entre une configuration classique, selon laquelle la roue arrière est entraînée par le pédalier, et une configuration d'assistance motorisée, selon laquelle la roue arrière est entraînée par le moteur. Cela évite une commutation manuelle entre ces deux configurations, telle que décrite dans US2010/0212985. Cela évite également le recours à un embrayage, tel que décrit dans US2004/0144584.

On dispose ainsi d'un deuxième mécanisme d'entraînement, motorisé, particulièrement simple à assembler, à monter et à mettre en oeuvre. Les principaux constituants sont des éléments disponibles dans le commerce, à des prix abordables.

En l'absence d'entraînement par le deuxième mécanisme d'entraînement, la deuxième roue libre laisse tourner librement le moyeu arrière.

L'élément souple de transmission peut notamment être une chaîne, dite chaîne auxiliaire, ou une courroie crantée.

La roue arrière comporte une jante circulaire ainsi que des rayons, ces derniers s'étendant entre la jante et le moyeu. De préférence, les rayons s'étendent entre le premier mécanisme d'entraînement et le deuxième mécanisme d'entraînement.

Selon l'invention, la bicyclette comporte un disque de frein, monté sur le moyeu arrière et le deuxième mécanisme d'entraînement s'étend entre le disque de frein et les rayons de la roue arrière.

Selon l'invention, le moyeu arrière est relié au cadre par un châssis, dit châssis arrière, mobile par rapport au cadre et relié à ce dernier par un amortisseur, le moteur étant monté sur le cadre en étant immobile par rapport à ce dernier.

Le moteur est de préférence un moteur électrique, auquel cas la bicyclette comporte une batterie. La batterie est avantageusement fixée sur le cadre, en étant immobile par rapport à ce dernier.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

### FIGURES

La figure 1 est une vue d'une bicyclette selon l'invention.
La figure 2A représente une vue générale, en perspective du moyeu arrière de la bicyclette. La figure 2B est une vue en coupe du moyeu arrière de la bicyclette. Les figures 2C et 2D sont des vues en perspectives du moyeu arrière de la bicyclette montrant les principaux éléments du deuxième mécanisme d'entraînement.
Les figures 3A, 3B et 3C détaillent le montage d'un disque de frein sur le moyeu arrière.
La figure 4 est un détail de la position du moteur sur le cadre de la bicyclette.

### EXPOSE DE MODES DE REALISATION PARTICULIERS

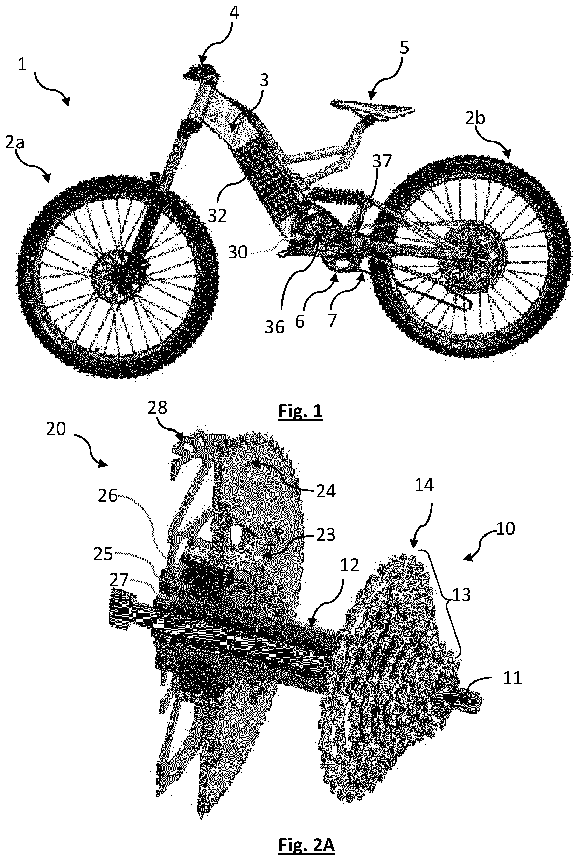

La figure 1 représente un mode de réalisation de l'invention. Une bicyclette 1 comporte une roue avant 2a et une roue arrière 2b, reliées par un cadre 3. La roue arrière 2b est une roue motrice de la bicyclette. Elle s'étend autour d'un axe arrière 11 et comporte un moyeu arrière 12 coaxial de l'axe arrière 11. L'axe arrière 11 et le moyeu arrière 12 sont représentés sur la figure 2A. Le cadre 3 comporte un guidon 4 commandant un pivotement de la roue avant 2a. Une selle 5 permet à un cycliste de s'asseoir, pour actionner un pédalier 6. Le pédalier 6 est solidaire du cadre 3. Il permet de mettre en mouvement une chaîne 7, cette dernière entraînant en rotation la roue arrière 2b par un premier mécanisme d'entraînement 10.

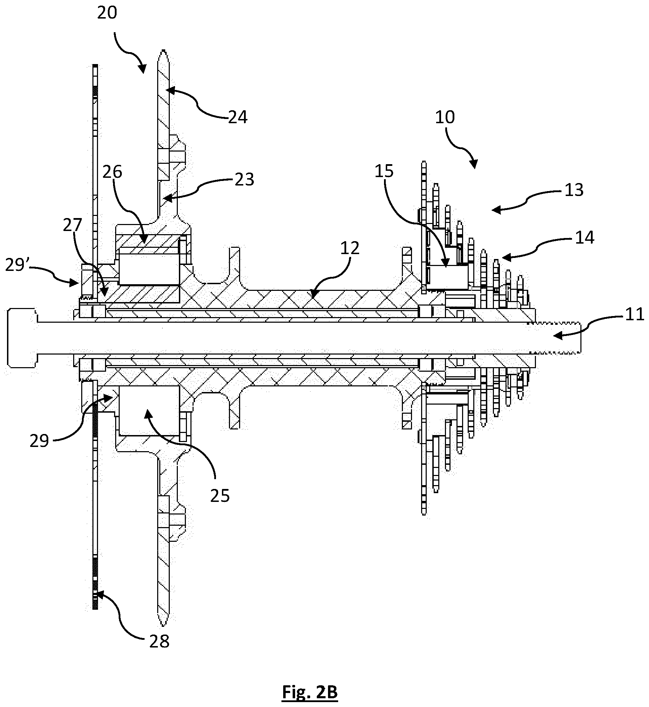

Le premier mécanisme d'entraînement 10 est représenté sur les figures 2A et 2B. Il s'agit d'un mécanisme classique, comportant :
- une cassette 13, comportant une pluralité de pignons concentriques 14 ;
- une première roue libre 15, sur laquelle est montée la cassette 13.

Le terme roue libre est connu de l'homme du métier. Elle est montée sur le moyeu arrière 12 et est apte à entraîner le moyeu arrière 12 en rotation lorsque la roue libre est également entraînée en rotation. Lorsque l'entraînement de la roue libre cesse, elle permet au moyeu arrière 12 de poursuivre sa rotation sans entraîner le pignon 14 ni la chaîne 7. Une roue libre comporte généralement une bague extérieure et une bague intérieure, la bague extérieure et la bague intérieure étant concentriques et coaxiales. La bague extérieure est apte à entraîner une rotation de la bague intérieure dans un sens de rotation prédéterminé, tandis que la bague intérieure est libre de tourner, sans entraîner la bague extérieure, dans deux sens de rotation opposés.

La chaîne 7 entraîne un des pignons 14 de la cassette 13, ce qui entraîne la première roue libre 15 en rotation et permet la rotation du moyeu arrière 12. La première roue libre 15 autorise une rotation du moyeu arrière 12 en l'absence d'entraînement par le pignon 14.

Le premier mécanisme d'entraînement 10 est un mécanisme mis en oeuvre sur la plupart des vélos actuels, et permettant la rotation de la roue arrière 2b en actionnant le pédalier 6. La chaîne peut être remplacée par une courroie, mais il est préférable d'utiliser une chaîne lorsqu'on dispose d'une cassette présentant différents pignons.

Le cadre 3 est relié à un moteur 30, de préférence un moteur électrique, ce dernier étant alimenté à une batterie 32. Le moteur électrique 30 comporte un arbre moteur 36, permettant l'entraînement d'un élément de transmission 37. L'élément de transmission 37 est souple : il peut notamment s'agir d'une chaîne, dite chaîne auxiliaire, ou d'une courroie, par exemple une courroie crantée. L'élément de transmission 37 entraîne en rotation le moyeu arrière 12 de la roue arrière par un deuxième mécanisme d'entraînement 20.

Le deuxième mécanisme d'entraînement 20 est décrit ci-dessous, en lien avec les figures 2A à 2D. Il comporte une couronne de transmission 24, notamment une couronne dentée, montée sur une deuxième roue libre 25 par un support de roue libre 23. Le support de roue libre 23 est relié à la deuxième roue libre 25 par une clavette 26, dite clavette supérieure 26. La clavette supérieure 26 permet d'entraîner, en rotation, la deuxième roue libre 25. La deuxième roue libre 25 est reliée au moyeu arrière 12 par une clavette 27, dite clavette inférieure. La clavette inférieure 27 permet d'entraîner le moyeu arrière 12 en rotation. Ainsi, la roue libre permet un entraînement du moyeu arrière, en étant entraînée par la couronne de transmission 24 et en entraînant à son tour le moyeu arrière 12. Ainsi, lorsque le moteur 30 est actionné, l'élément de transmission 37 est entraîné par l'arbre moteur 36. L'élément de transmission entraîne à son tour la couronne de transmission 24, cette dernière entraînant le moyeu arrière 12 en rotation, par l'intermédiaire :
- de la clavette supérieure 26 ;
- de la deuxième roue libre 25 ;
- et de la clavette inférieure 27.

En l'absence d'entraînement par la couronne de transmission, la deuxième roue libre 25 permet au moyeu arrière 12 de poursuivre sa rotation librement. La couronne de transmission 24 et l'élément souple de transmission 37 peuvent alors être immobiles par rapport au cadre 3.

La bicyclette peut alors fonctionner selon trois configurations:
- une configuration de pédalage : l'entraînement de la roue motrice arrière 2b est assuré par le pédalier 6, par l'intermédiaire de la chaîne 7, et du premier mécanisme d'entraînement 10, ce dernier comportant les pignons 14 et la première roue libre 15 ; dans ce cas, la deuxième roue libre 25 laisse tourner librement le moyeu arrière 12. La couronne de transmission 24 reste immobile par rapport à la bicyclette, de même que l'élément souple de transmission 37. Ainsi, on ne subit pas un éventuel frottement de la courroie de transmission ou de l'élément souple de transmission. Une telle configuration correspond à une situation sur le plat ou en montée légère, éventuellement dans certaines descentes modérées.
- une configuration d'assistance : la roue motrice arrière 2b est entraînée par le moteur 30, par l'intermédiaire de l'arbre moteur 36, de l'élément de transmission 37, et du deuxième mécanisme d'entraînement 20, ce dernier comportant la couronne de transmission 24 et la deuxième roue libre 25. Dans ce cas, la première roue libre 15 peut laisser tourner librement le moyeu arrière 12, les pignons 14 étant immobiles par rapport à la bicyclette. La deuxième roue libre 25 entraîne le moyeu arrière 12, l'entraînement étant motorisé. La première roue libre 15 peut également être entraînée par un pignon 14 lorsque l'utilisateur pédale, ce qui a pour effet un entraînement du moyeu 12, complémentaire de l'entraînement motorisé fourni par la deuxième roue libre 25. Une telle configuration correspond à une utilisation en montée, le moteur 30 fournissant alors tout ou partie de l'entraînement de la roue arrière.
- une configuration de roue libre, selon laquelle la première roue libre 15 et la deuxième roue libre 25 laissent le moyeu arrière 12 tourner librement. Le moyeu arrière 12 n'est entraîné ni par le premier mécanisme d'entraînement 10, ni par le deuxième mécanisme d'entraînement 20. Une telle utilisation correspond typiquement à une utilisation en descente.

L'entraînement de la roue arrière 2b par le deuxième mécanisme d'entraînement 20 est efficace, et permet d'obtenir un couple plus important que celui que l'on obtiendrait en disposant le moteur 30 au niveau du moyeu arrière 12, comme sur la plupart des bicyclettes électriques actuelles. Le diamètre de la couronne de transmission est de préférence supérieur à 10 cm, et typiquement compris entre 15 cm et 30 cm. Cela permet d'obtenir un couple important, permettant une propulsion efficace de la bicyclette 1 dans des montées raides.

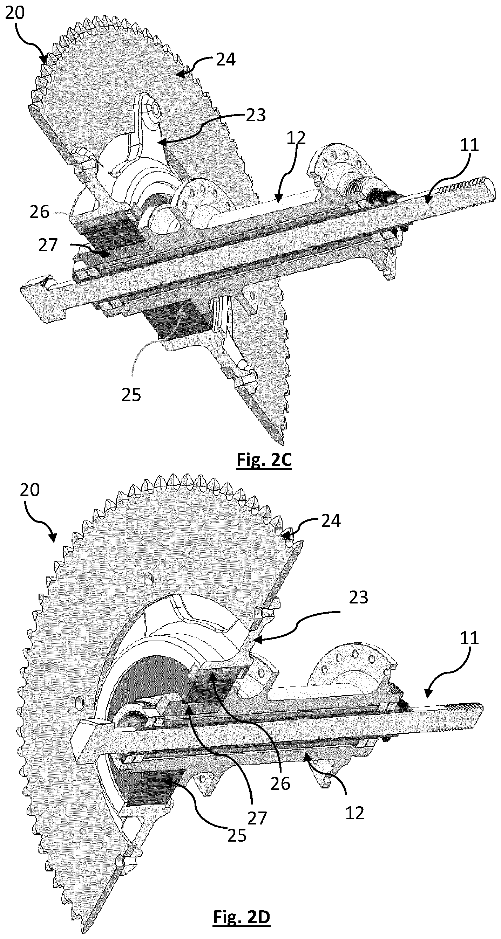

Les figures 2C et 2D permettent de distinguer les principaux composants du deuxième mécanisme d'entraînement 20, en particulier la couronne de transmission 24, reliée par un support de couronne 23 à la deuxième roue libre 25. Les clavettes supérieure 26 et inférieure 27 transmettent un mouvement de rotation respectivement de la couronne de transmission 24, montée sur son support 23, à la deuxième roue libre 25, et de la deuxième roue libre 25 au moyeu arrière 12.

La présence de la deuxième roue libre 25, entre la couronne de transmission 24 et le moyeu 12 permet de passer d'une configuration de pédalage (ou de roue libre) à une configuration d'assistance par le moteur, de façon particulièrement simple, sans que l'utilisateur n'ait mettre pied à terre. La commutation entre les deux configurations est assurée par une simple activation du moteur 30, contrairement à la bicyclette décrite dans US2010/0212985. En l'absence d'assistance motorisée, la couronne de transmission 24 peut demeurer immobile par rapport à la bicyclette 1, de même que l'élément de transmission 37.

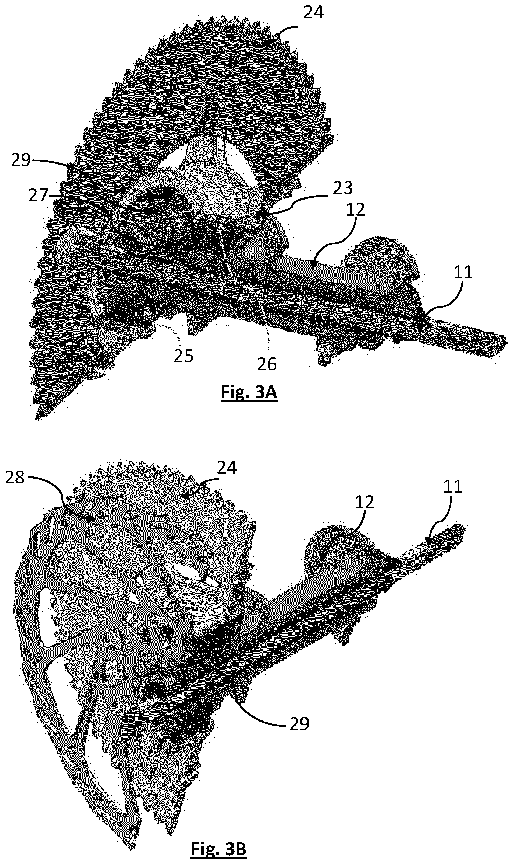

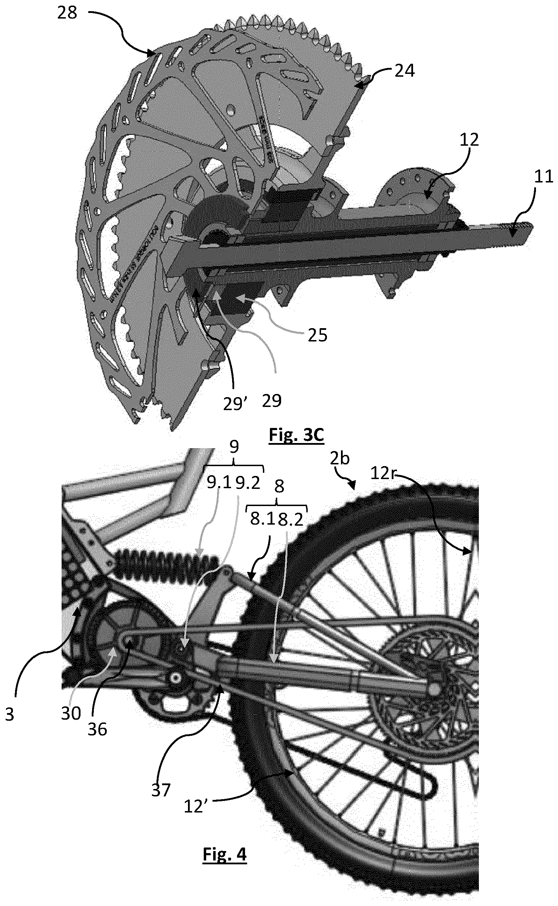

Comme représenté sur les figures 3A à 3C, un disque de frein 28 est monté sur la roue arrière 2b, en étant fixé au moyeu 12. Le disque de frein 28 est relié à la deuxième roue libre 25 par un support de disque 29, ce dernier étant fixé au moyeu arrière 12 par l'intermédiaire de la clavette inférieure 27. Le support de disque 29 est visible sur la figure 3A. Il comporte des ergots aptes à s'engager dans des ouvertures ménagées à la base du disque de frein 28, comme on peut le voir sur la figure 3B. Un écrou 29' maintient le disque de frein 28 contre le support de disque 29. Cf. figure 3C. L'écrou 29' maintient également la deuxième roue libre 25 sur le moyeu arrière 12.

La roue arrière comporte une jante 12', ainsi que des rayons 12r en s'étendant entre le moyeu arrière 12 et la jante 12'. La deuxième roue libre 25 s'étend entre le disque de frein 28 et les rayons 12r de la roue arrière. La proximité entre la deuxième roue libre 25 et les rayons 12r permet de ne pas déporter le moteur 30, ainsi l'élément de transmission 37, par rapport au cadre 3. Il est en effet préférable que l'élément de transmission 37 s'étende le plus proche possible du cadre, parallèlement à ce dernier.

La roue arrière 2b est reliée au cadre 3 par un châssis arrière 8, représenté sur la figure 4. Le châssis arrière 8 est mobile par rapport au cadre 3. Il est relié à ce dernier par un premier bras 8.1 et un deuxième bras 8.2. Le premier bras 8.1 est relié au cadre 3 par un amortisseur 9.1, formant une suspension arrière. Le deuxième bras 8.2 est relié au cadre 3 par une liaison libre en rotation 9.2. Ainsi, la roue arrière est dite suspendue, du fait de l'amortisseur 9.1 s'étendant entre le châssis arrière 8 au cadre 3, par lequel le châssis 8 arrière est mobile par rapport au cadre 3. Le moteur 30 est de préférence monté sur le cadre 3 par une liaison rigide. Il en est de même de la batterie 32 alimentant le moteur 30. Les inventeurs ont jugé que cette solution était préférable à celle, pourtant suggérée dans US2004/014584, consistant à disposer le moteur dans la partie suspendue. Les inventeurs ont en effet considéré qu'il était préférable de limiter la masse de la partie suspendue.

L'invention pourra s'appliquer à des bicyclettes, en particulier des vélos tout terrain, en permettant une transition particulièrement aisée entre une configuration de pédalage et une configuration d'assistance, en particulier en montée.

## Revendications

1. Bicyclette (1) comportant une roue avant (2a) et une roue arrière (2b), les roues avant et arrière étant reliées par un cadre (3), la roue arrière comportant des rayons (12r) et étant montée sur un moyeu arrière (12), le moyeu arrière étant relié à un premier mécanisme d'entraînement (10), comportant au moins un pignon (14) monté sur une première roue libre (15), le pignon étant apte à être entraîné par une chaîne (7), cette dernière étant apte à être mise en mouvement par un pédalier (6),
la bicyclette comportant:
- un moteur (30), monté sur le cadre (3) ;
- le moteur étant configuré pour mettre en mouvement, au moyen d'un arbre moteur (36), un élément souple de transmission (37);
- le moyeu arrière (12) étant relié à un deuxième mécanisme d'entraînement (20), apte à être entraîné par l'élément souple de transmission (37) ;
de telle sorte que la roue arrière (2b) est apte à être entraînée :
- par le premier mécanisme d'entraînement (10), lorsque la chaîne (7) est mise en mouvement par le pédalier ;
- ou par le deuxième mécanisme d'entraînement (20), lorsque l'élément souple de transmission (37) est actionné par le moteur (30);
- la bicyclette étant telle que le deuxième mécanisme d'entraînement (20) comporte une couronne de transmission (24) solidaire d'une deuxième roue libre (25), la couronne de transmission étant apte à être entraînée en rotation par l'élément souple de transmission (37);
- la deuxième roue libre (25) est insérée autour du moyeu arrière (12), de telle sorte que la roue libre (25) est apte à entraîner le moyeu arrière (12) lorsque l'élément souple de transmission (37) entraîne la couronne de transmission (24) en rotation ;
la bicyclette étant telle qu'elle comporte un disque de frein (28), monté sur le moyeu arrière (12), le deuxième mécanisme d'entraînement (20) s'étendant entre les rayons (12r) et le disque de frein (28), la bicyclette étant **caractérisée en ce que** le moyeu arrière (12) est relié au cadre par un châssis (8), dit châssis arrière, mobile par rapport au cadre (3) et relié à ce dernier par un amortisseur (9.1), le moteur (30) étant monté sur le cadre (3) en étant immobile par rapport au cadre.

2. Bicyclette selon la revendication 1, dans laquelle l'élément souple de transmission (37) est une chaîne, dite chaîne auxiliaire, ou une courroie crantée.

3. Bicyclette selon l'une quelconque des revendications précédentes, dans laquelle les rayons (12r) s'étendent entre le premier mécanisme d'entraînement (10) et le deuxième mécanisme d'entraînement (20).

4. Bicyclette selon l'une quelconque des revendications précédentes, dans laquelle le moteur est un moteur électrique, la bicyclette comportant une batterie (32) montée sur le cadre, la batterie étant immobile par rapport au cadre (3).

5. Bicyclette selon l'une quelconque des revendications précédentes, dans laquelle la couronne de transmission (24) a un diamètre supérieur à 10 cm.

6. Bicyclette selon la revendication 5, dans laquelle la couronne de transmission (24) a un diamètre compris entre 15 cm et 30 cm, de manière à permettre une propulsion efficace de la bicyclette dans les montées raides.

7. Bicyclette selon l'une quelconque des revendications précédentes, dans laquelle l'élément souple de transmission (37) est apte à être entraîné en rotation autour de l'arbre moteur (36).

## Patentansprüche

1. Fahrrad (1), welches ein Vorderrad (2a) und ein Hinterrad (2b) umfasst, wobei das Vorder- und das Hinterrad durch einen Rahmen (3) verbunden sind, wobei das Hinterrad Speichen (12r) umfasst und auf einer Hinterradnabe (12) angebracht ist, wobei die Hinterradnabe mit einem ersten Antriebsmechanismus (10) verbunden ist, der mindestens ein Ritzel (14) umfasst, das auf einem ersten Freilaufrad (15) gelagert ist, wobei das Ritzel von einer Kette (7) antreibbar ist, wobei diese Letztere von einem Tretlager (6) in Bewegung versetzbar ist,
wobei das Fahrrad umfasst:
- einen Motor (30), der am Rahmen (3) angebracht ist;
- wobei der Motor dafür ausgelegt ist, mittels einer Motorwelle (36) ein flexibles Übertragungselement (37) in Bewegung zu versetzen;
- wobei die Hinterradnabe (12) mit einem zweiten Antriebsmechanismus (20) verbunden ist, der von dem flexiblen Übertragungselement (37) antreibbar ist;
derart, dass das Hinterrad (2b) antreibbar ist:
- von dem ersten Antriebsmechanismus (10), wenn die Kette (7) von dem Tretlager in Bewegung versetzt wird;
- oder von dem zweiten Antriebsmechanismus (20), wenn das flexible Übertragungselement (37) von dem Motor (30) betätigt wird;
- wobei das Fahrrad so beschaffen ist, dass der zweite Antriebsmechanismus (20) einen Übertragungskranz (24) umfasst, der mit einem zweiten Freilaufrad (25) fest verbunden ist, wobei der Übertragungskranz von dem flexiblen Übertragungselement (37) drehend antreibbar ist;
- wobei das zweite Freilaufrad (25) um die Hinterradnabe (12) herum eingesetzt ist, derart, dass das Freilaufrad (25) geeignet ist, die Hinterradnabe (12) anzutreiben, wenn das flexible Übertragungselement (37) den Übertragungskranz (24) drehend antreibt;
wobei das Fahrrad so beschaffen ist, dass es eine Bremsscheibe (28) aufweist, die auf der Hinterradnabe (12) angebracht ist, wobei sich der zweite Antriebsmechanismus (20) zwischen den Speichen (12r) und der Bremsscheibe (28) erstreckt,
wobei das Fahrrad **dadurch gekennzeichnet ist, dass** die Hinterradnabe (12) mit dem Rahmen durch ein Fahrgestell (8), hinteres Fahrgestell genannt, verbunden ist, das in Bezug auf den Rahmen (3) beweglich ist und mit diesem Letzteren durch einen Stoßdämpfer (9.1) verbunden ist, wobei der Motor (30) am Rahmen (3) angebracht und dabei unbeweglich in Bezug auf den Rahmen ist.

2. Fahrrad nach Anspruch 1, wobei das flexible Übertragungselement (37) eine Kette, Hilfskette genannt, oder ein Zahnriemen ist.

3. Fahrrad nach einem der vorhergehenden Ansprüche, wobei sich die Speichen (12r) dem ersten Antriebsmechanismus (10) und dem zweiten Antriebsmechanismus (20) erstrecken.

4. Fahrrad nach einem der vorhergehenden Ansprüche, wobei der Motor ein Elektromotor ist, wobei das Fahrrad eine Batterie (32) umfasst, die am Rahmen angebracht ist, wobei die Batterie unbeweglich in Bezug auf den Rahmen (3) ist.

5. Fahrrad nach einem der vorhergehenden Ansprüche, wobei der Übertragungskranz (24) einen Durchmesser aufweist, der größer als 10 cm ist.

6. Fahrrad nach Anspruch 5, wobei der Übertragungskranz (24) einen Durchmesser aufweist, der zwischen 15 cm und 30 cm liegt, um so einen effizienten Antrieb des Fahrrads an steilen Steigungen zu ermöglichen.

7. Fahrrad nach einem der vorhergehenden Ansprüche, wobei das flexible Übertragungselement (37) um die Motorwelle (36) drehend antreibbar ist.

## Claims

1. Bicycle (1) comprising a front wheel (2a) and a rear wheel (2b), the front and rear wheels being linked by a frame (3), the rear wheel comprising spokes (12r) and being mounted on a rear hub (12), the rear hub being linked to a first drive mechanism (10), comprising at least one pinion (14) mounted on a first free wheel (15), the pinion being able to be driven by a chain (7), the latter being able to be set in motion by a crankset (6),
the bicycle comprising:
- a motor (30), mounted on the frame (3);
- the motor being configured to set in motion, by means of a motor shaft (36), a flexible transmission element (37);
- the rear hub (12) being linked to a second drive mechanism (20), that can be driven by the flexible transmission element (37);
such that the rear wheel (2b) can be driven:
- by the first drive mechanism (10), when the chain (7) is set in motion by the crankset;
- or by the second drive mechanism (20), when the flexible transmission element (37) is actuated by the motor (30);
- the bicycle being such that the second drive mechanism (20) comprises a transmission crown ring (24) secured to a second free wheel (25), the transmission crown ring being able to be driven in rotation by the flexible transmission element (37);
- the second free wheel (25) is inserted around the rear hub (12), such that the free wheel (25) can drive the rear hub (12) when the flexible transmission element (37) drives the transmission crown ring (24) in rotation;
the bicycle being such that it comprises a brake disc (28), mounted on the rear hub (12), the second drive mechanism (20) extending between the spokes (12r) and the brake disc (28),
the bicycle being **characterized in that** the rear hub (12) is linked to the frame by a chassis (8), called rear chassis, that is movable with respect to the frame (3) and linked thereto by a damper (9.1), the motor (30) being mounted on the frame (3) while being immobile with respect to the frame.

2. Bicycle according to Claim 1, wherein the flexible transmission element (37) is a chain, called auxiliary chain, or a toothed belt.

3. Bicycle according to either one of the preceding claims, wherein the spokes (12r) extend between the first drive mechanism (10) and the second drive mechanism (20).

4. Bicycle according to any one of the preceding claims, wherein the motor is an electric motor, the bicycle comprising a battery (32) mounted on the frame, the battery being immobile with respect to the frame (3).

5. Bicycle according to any one of the preceding claims, wherein the transmission crown ring (24) has a diameter greater than 10 cm.

6. Bicycle according to Claim 5, wherein the transmission crown ring (24) has a diameter of between 15 cm and 30 cm, so as to allow an effective propulsion of the bicycle in steep climbs.

7. Bicycle according to any one of the preceding claims, wherein the flexible transmission element (37) can be driven in rotation around the motor shaft (36).
